# EUROPEAN PATENT APPLICATION

(11) **EP 3 100 609 A1**
(43) Date of publication of application: **07.12.2016**
(21) Application number: 16162393.9
(22) Date of filing: 24.03.2016
(51) Int. Cl.: A01K 15/02

(54) **PET INTERACTIVE SYSTEM BASED ON WIRELESS COMMUNICATION NETWORK**

(30) Priority: 02.06.2015 CN 201510295295
(71) Applicant: Jiangsu Favorite Leisure Articles Co., Ltd., Jiangsu Province 224031 (CN)
(72) Inventor: SHI, Hao, Louwang Town, Yandu District Yancheng City, Jiangsu Province 224031 (CN)
(74) Representative: 2K Patentanwälte Blasberg Kewitz & Reichel

(57) **Abstract**

The present invention relates to a pet interactive system based on wireless communication network, which belongs to the field of pet toys. The pet interactive system based on wireless communication network includes a wireless camera lens (1) installed indoors, a pet toy (2) and a control terminal (3), wherein the wireless camera lens is configured to send shot images to the control terminal; the inside of the pet toy is provided with a wireless communication module (21), a phonation module (22) and a control module (23), the wireless communication module is configured to be communicated with the control terminal, the phonation module is configured to play voices in real time, and the control module is configured to control the walking of the pet toy; the control terminal is configured to receive and display the images shot by the wireless camera lens, receive the voices and control instructions of a user at the same time, and send the voices and the control instructions to the wireless communication module of the pet toy. Through the present invention, a master may view the situations of the pet at home through the control terminal all the time, and remotely control the pet toy to play with the pet, and can also make the pet to hear the voice of the master through the pet toy, thus implementing the remote interaction between the master and the pet.

## Description

### Technical Field

The present invention relates to the field of pet toys, and more particularly, relates to a pet interactive system based on wireless communication network.

### Background Art

Raising pets is very universal and common in the present society, and has become a very important way of enjoyment for people. People and pets have established an important relationship, and the intimating degree of this relationship may even go beyond family affection, friendship and love sometimes because the relationship between the two is very simple but subtle. The pets as partner animals of human beings is one resource for human beings to gain happy and healthy life, and raising pets may make the life of people healthier and more fulfilling.

However, raising pets limits the freedom of the master to some degree; when the master needs to go out or there is nobody at home, the pets can be only kept at home for most occasions because nobody can take care of them. At this moment, most of the pets will feel lonely; although the kindheartedly master will provide some toys for the pets, but the boys cannot replace the accompanying of the master; as time passes, the physical and psychological health of the pets will be affected.

### Summary of the invention

It is an object of the present invention to lessen the above drawbacks at least partially and particularly to provide a solution enabling a remote interaction between the master and the pet.

This problem is solved by a pet interactive system based on a wireless communication network as claimed by claim 1. Further advantageous embodiments are the subject-matter of the dependent claims.

According to the present invention there is provided a pet interactive system based on a wireless communication network which enables the masters to view the situations of the pet(s) at home at any time and remotely control the pet toy to play with the pet(s) with respect to the foregoing problems.

The object of the present invention is implemented particularly by a pet interactive system based on a wireless communication network, which comprises a wireless camera lens, a pet toy and a control terminal. The wireless camera lens is fixed at home, particularly indoors, and is configured to send shot images taken from the home, where the pet stay lonely, to the control terminal. The inside of the pet toy is provided with a wireless communication module, a phonation module and a control module, wherein the wireless communication module is configured to communicate with the control terminal, the phonation module is configured to play voices from (provided by) the control terminal and received by the wireless communication module in real time, and the control module is configured to control the walking or other movements of the pet toy according to a control instruction sent by the control terminal.

Particularly, the control terminal is configured to receive and display the images shot by the wireless camera lens at home, to receives the voices and control instructions of a user at the same time, and to send the voice and the control instructions to the wireless communication module of the pet toy.

According to a further advantageous embodiment, a camera lens is installed on the pet toy, which is configured to send the shot images to the control terminal for displaying via the wireless communication module.

According to a further advantageous embodiment, the pet toy is also provided with an inductive sensor, wherein an induction signal is produced (generated) by the inductive sensor after being triggered and is sent to the control terminal via the wireless communication module, and the control terminal gives out a prompting sound after receiving the induction signal.

According to a further advantageous embodiment, both the wireless communication module and the wireless camera lens are configured to establish and maintain a communication connection with the control terminal particularly via WiFi (Wireless Fidelity).

According to a further advantageous embodiment, the control terminal is a smartphone or a tablet.

The present invention particularly has the following advantageous effects: by means of the system, the master may view the situations of the pet at home remotely by means of the smartphone or tablet all the time, and, if required, may remotely control the pet toy to play with the pet, and can also make the pet to hear the voice of the master by means of the pet toy, thus implementing a remote interaction between the master and the pet.

### Brief Description of the Drawings

The present invention will be further described in details hereinafter with reference to the drawings and specific embodiments. In the drawings:
- Fig. 1: is a block diagram of the present invention.
- Fig. 2: is a structure block diagram of the present invention.

### Detailed Description of the Preferred Embodiments

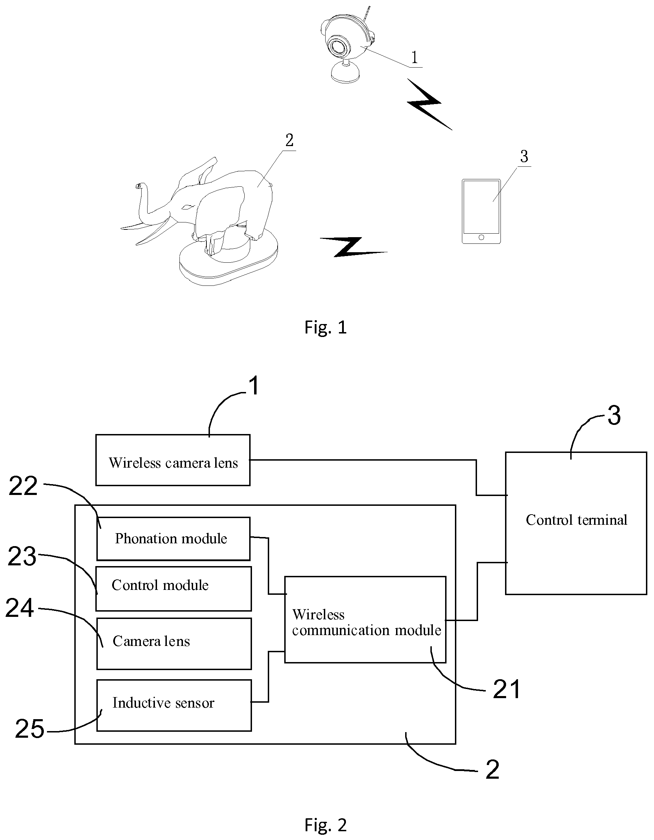

As shown in Fig. 1 and Fig. 2, a pet interactive system based on a wireless communication network includes a wireless camera lens 1, a pet toy 2 and a control terminal 3.

The wireless camera lens 1 is fixed at home, particularly indoors but possibly also in an outdoor area of the home of the master, and is usually fixedly installed at a position offering a large viewing angle and a clear visual field, for instance, at a certain corner on the top of a room from where the majority of the room may be viewed or monitored, so as to conveniently shoot images about the activity situations of the pets at home, particularly indoors. Moreover, the wireless camera lens 1 is configured to establish a communication connection with the control terminal 3 via a wireless communication network, particularly via WiFi, and to send the shot images to the control terminal 3.

The inside of the pet toy 2 is provided with a wireless communication module 21, a phonation module 22 and a control module 23. The wireless communication module 21 is configured to communicate with the control terminal 3 via a wireless network function, particularly using WiFi. The phonation module 22 is configured to play voices from the control terminal 3 (provided by the control terminal 3) and received by the wireless communication module 21 in real time. The control module 23 is configured to control the walking or suitable movements of the pet toy 2 according to a control instruction sent by the control terminal 3.

The control terminal 3 is generally a smartphone or a tablet, and is configured to receive and display the images shot by the wireless camera lens 1 for a user to view, to receive the voices and control instructions of the user at the same time, and to send the voices and the control instructions to the wireless communication module 21 of the pet toy 2. Usually, one control terminal 3 may also be configured to implement the controlling of a plurality of pet toys 2.

Because the fixed wireless camera lens 1 may have a dead space for shooting (i.e. for certain viewing angles it might not be possible to take images), a (second) camera lens 24 may also be installed on the pet toy 2, so as to conveniently view the playing situations between the pet and the pet toy 2, and the shot images by this (second) camera can be transmitted to the control terminal 3 for displaying via the wireless communication module 21 using the wireless communication network.

By using the system, the pet master can view the activity situations of the pet, particularly indoors, through the mobile phone or tablet at anytime; meanwhile, the pet toy can be remotely controlled to run so as to attract the attention of the pet and attract the pet to play with the pet toy. Moreover, a voice instruction can be given out to the pet via the mobile phone or the tablet, wherein the voice instruction will be sent to the pet toy, so that the pet toy may give out a voice instruction in the same way as if given directly by the master himself, thus improving the attractiveness of the pet toy on the pet.

Because the master cannot view the situation of the pet at home at anytime, it is usually not possible to control the pet toy 2 to attract the interest or attention of the pet to play with the pet anytime. Therefore, according to a further embodiment the pet toy 2 may also be provided with an inductive sensor 25, wherein an induction signal produced by the inductive sensor 25 after being triggered is sent to the control terminal 3 via the wireless communication module 21, and the control terminal 3 gives out a prompting sound after receiving the induction signal. When the pet is interested to a certain pet toy 2 and walks close to the pet toy 2, the inductive sensor 25 will be triggered; at this moment, the mobile phone or tablet of the master will give out a prompting sound to prompt the master to control the pet toy 2 to walk or phonate or perform related actions, so as to implement the playing interaction with the pet.

## Claims

1. A pet interactive system based on wireless communication network, comprising a wireless camera lens (1),
a pet toy (2) and
a control terminal (3), wherein:
the wireless camera lens (1) is configured to be fixed at home, particularly indoors, and is configured to send shot images to the control terminal (3);
the inside of the pet toy (2) is provided with a wireless communication module (21), a phonation module (22) and a control module (23), wherein
the wireless communication module (21) is configured to communicate with the control terminal (3),
the phonation module (22) is configured to play voices from the (provided by the) control terminal (3) and received by the wireless communication module (21) in real time, and
the control module (23) is configured to control the walking or movements of the pet toy (2) according to a control instruction sent by the control terminal (3); and
the control terminal (3) is configured to receive and display the images shot by the wireless camera lens (1), to receive the voices and control instructions of a user at the same time, and to send the voices and the control instructions to the wireless communication module (21) of the pet toy (2).

2. The pet interactive system based on wireless communication network according to claim 1, wherein
a camera lens (24) is installed on the pet toy (2), and the pet toy (2) is configured to send the shot images to the control terminal (3) for displaying via the wireless communication module (21).

3. The pet interactive system based on wireless communication network according to claim 1 or 2, wherein the pet toy (2) is further provided with an inductive sensor (25), wherein
an induction signal produced by the inductive sensor (25) after being triggered is sent to the control terminal (3) via the wireless communication module (21), and
the control terminal (3) is configured to give out a prompting sound after receiving the induction signal.

4. The pet interactive system based on wireless communication network according to any of the preceding claims, wherein both the wireless communication module (21) and the wireless camera lens (1) are configured to implement a communication connection with the control terminal (3) through WiFi.

5. The pet interactive system based on wireless communication network according to any of the preceding claims, wherein the control terminal (3) is a smartphone or tablet.
